# EUROPEAN PATENT APPLICATION

(11) **EP 1 522 844 A1**
(43) Date of publication of application: **13.04.2005**
(21) Application number: 03730718.8
(22) Date of filing: 30.05.2003
(51) Int. Cl.: G01N 21/59

(54) **POWDER DENSITY-MEASURING DEVICE AND AUTOMATIC POWDER SPRAY AMOUNT CONTROL SYSTEM USING THE SAME**

(30) Priority: 07.06.2002 JP 2002167629
(71) Applicant: KYOWA HAKKO KOGYO CO., LTD., Chiyoda-ku, Tokyo 100-8185 (JP)
(72) Inventor: Hirota, E., c/o Kyowa Hakko Kogyo Co., Ltd., Sunto-gun, Shizuoka 411-8731 (JP); Hayakawa, Kimiaki, c/o Kyowa Hakko Kokyo Co., Ltd., Sunto-gun, Shizuoka 411-8731 (JP); Iwase, Yuji, c/o Kyowa Hakko Kogyo Co., Ltd., Sunto-gun, Shizuoka 411-8731 (JP); Yoshimoto, H., c/o Kyowa Hakko Kogyo Co., Ltd., Sunto-gun, Shizuoka 411-8731 (JP); Morimoto, Kiyoshi, c/o Kyowa Hakko Kogyo Co., Ltd., Sunto-gun, Shizuoka 411-8731 (JP)
(74) Representative: VOSSIUS & PARTNER
(86) International application number: PCT/JP2003/006825
(87) International publication number: WO 2004/005900

(57) **Abstract**

A powder concentration measuring apparatus comprising a pair of purge gas introducing paths being provided across a material measuring path which introduces a powder material pneumatically transported, a pair of transparent windows being provided so that said material measuring path is viewable through said pair of purge gas introducing paths at the one of the transparent windows, and the light receiving device being provided at the other of the transparent windows, and a powder concentration operation and control means, wherein the control means calculates a powder concentration depending on the light amount received by the light receiving device when a light beam is projected into the material measuring path from the light projecting device.

## Description

### Technical Field

The present invention relates to an improvement of a light permeable type powder concentration measuring apparatus, more particularly to a powder concentration measuring apparatus which is simple in structure and is able to accurately measure a powder concentration, and to an automatic powder spray amount control system using the same.

### Background Art

A light permeable type powder concentration measuring apparatus has been already known.

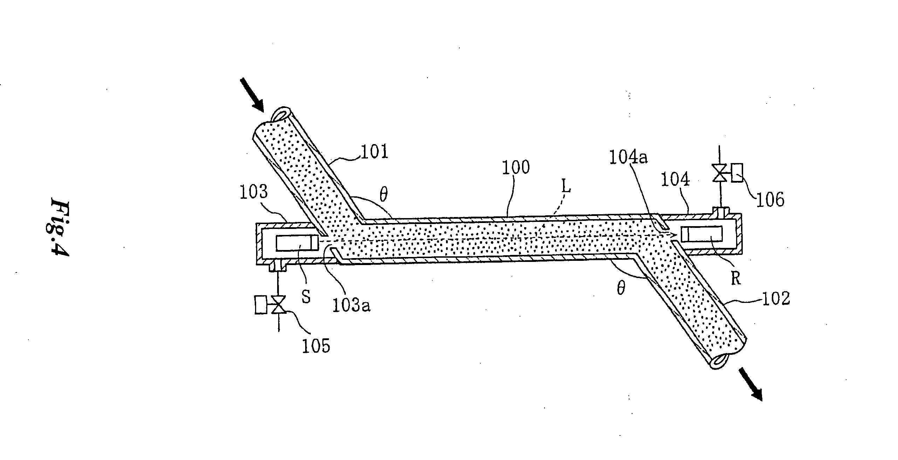

Fig.4 shows a diagrammatical structure of a prior powder concentration measuring apparatus which has been proposed in JP-A-5-126738.

A material introduction pipe 101 and a material discharge pipe 102 which are provided for the upstream end and the downstream end of a straight material measuring pipe 100 so as to be inclined and bent in such a manner that the pipes 101 and 102 are apart each other with a predetermined angle θ , θ , respectively. Branch pipes 103, 104 which include a light projector S and a light receiver R respectively are extended at each end of the material measuring pipe 100, so that the light projector S and the light receiver R are opposed each other at both ends of the pipe 100. Light with superior linearity is used as the light beam radiated from the light projector S.

Each branch pipe 103, 104 form transparent apertures 103a, 104a and the light axis L of the light projector S and the light receiver R is provided so as to conform to these transparent apertures 103a, 104a. A compressed air source (not shown) is connected to the branch pipes 103, 104 through valves 105, 106, respectively.

According to such a structure, the valves 105, 106 are opened to introduce a compressed gas in both branch pipes 103, 104 before introducing a powder material in the material measuring pipe 100, so that the internal pressure of the branch pipes 103, 104 becomes higher than that of the material measuring pipe 100, thereby preventing the powder material moving in the material measuring pipe 100 from entering in the branch pipes 103, 104. When the internal pressure is kept in the material measuring pipe 100 in such degree that the moving flow therein is not disturbed, then a powder material is introduced in the material measuring pipe 100, and a light beam is emitted from the light projector S provided at one end of the material measuring pipe 100 into the light receiver R, the light beam passes through the material measuring pipe 100 to be received in the light receiver R which is provided opposite to the light projector S. The light beam is absorbed and scattered by the material which has been introduced and is being transported in the material measuring pipe 100, so that an attenuated light is received in the light receiver R.

According to the measuring apparatus, measuring the attenuation rate of the received light amount when the light beam radiated from the light projector S is received in the light receiver R, so that the powder concentration of the material transporting in the material measuring pipe 100 mixed with a transport gas is indirectly measured.

However, such a prior powder concentration measuring apparatus has such complicated structure that the light projector S and the light receiver R are opposed at both ends of the material measuring pipe 100 and the material introduction pipe 101 and the material discharge pipe 102 are bent to be projected at both ends of the material measuring pipe 100, thereby requiring a sufficient setting area.

The powder material to be introduced in the material measuring pipe 100 is changed its course by the material introduction pipe 101 just before entering in the material measuring pipe 100 and the material discharge pipe 102 just after being discharged in the material measuring pipe 100, thus being subjected to speed change. Further, because of the gas pressure acting from the branch pipes 103, 104 provided at both ends of the material measuring pipe 100, the powder concentration is measured which is different from the powder concentration of the tip end portion of the material measuring pipe 100, which is important for control purpose, thereby causing a large error.

Further, the compressed gas into the branch pipes 103, 104 can not be stopped before stopping the transportation of the powder material which is pneumatically transported in the material measuring pipe 100, so that there is a problem that the powder material being pneumatically transported in the material measuring pipe 100 enters into the branch pipes 103, 104 from the transparent apertures 103a, 104a to contaminate the light projector S and the light receiver R with the powder if the compressed gas were stopped because of a control mistake.

In addition, according to the above-mentioned measuring apparatus, it requires time for stabilizing the concentration of powder material pneumatically transported in the material measuring pipe 100, so that there is a problem such that the powder concentration is not measured at real time, thereby causing a demand of improvement.

### Disclosure of the Invention

The present invention has been made in order to solve the above-mentioned problems and its object is to provide a powder concentration measuring apparatus in which a light projector and a light receiver are not contaminated with the powder pneumatically transported in a transport pipe, is simple in structure, and is able to accurately measure the concentration of the powder pneumatically transported.

The present invention proposes the following powder concentration measuring apparatus and powder spray amount automatic control system in order to achieve the above-mentioned objects.

The powder concentration measuring apparatus described in claim 1 is comprised of a pair of purge gas introducing paths being provided across a material measuring path which introduces a powder material pneumatically transported and a pair of transparent windows, each of the transparent windows being provided that the material measuring paths is viewable through said pair of purge gas introducing paths. The apparatus is further comprised of a light projecting device and a light receiving device, the light projecting device being provided at the one of the transparent windows, and the light receiving device is provided at the other of the transparent windows, and a powder concentration operation and control means, the control means calculating a powder concentration depending on the attenuated light amount obtained by comparing the light amount received by the light receiving device when a light beam is projected from said light projecting device and radiated into the material measuring path and then initial light amount.

Further, according to the powder concentration measuring apparatus described in claim 2, the material measuring path is connected to a material transport pipe in which a powder material is pneumatically transported and has the same or a larger internal diameter than that of the material transport pipe.

Still further according to claim 3, an automatic powder spray amount control system is proposed.

The automatic powder spray amount control system is comprised of a powder spray means comprising a material storing chamber for storing a powder material therein and a dispersing chamber equipped with an air introduction port and a powder discharge port, the air introduction port introducing a compressed air or a pulsating vibration air generated by using the compressed air, a powder concentration measuring apparatus as set forth in claim 1 or 2, connected to the material discharge port via the material transport pipe. The system is further comprised of a control means for controlling at least one of control factors, which are the flow amount and frequency of the compressed air or the pulsating vibration air generated by means of the compressed air supplied to the dispersion chamber of the powder spray means, and the amount of powder material stored in the material storing chamber, by comparing the powder concentration measured by the powder concentration measuring apparatus with a control target concentration prepared in advance.

Further, claim 4 proposes an automatic powder spray amount control system, the powder spray means constitutes a lubricant spray means of an externally lubricating tableting machine.

### Brief Description of Drawings

Fig.1 is a vertical sectional view showing a diagrammatic structure of a powder concentration measuring apparatus according to the present invention.
Fig.2 shows a basic structure of an automatic powder spray amount control system according to the present invention.
Fig.3a - Fig.3c explain a spraying principle of a powder spray means of the present invention.
Fig.4 shows a basic structure of a prior light permeable type powder concentration measuring apparatus.

### Best Mode for Carrying Out the Invention

One of the embodiments of the present invention will be explained referring to the attached drawings.

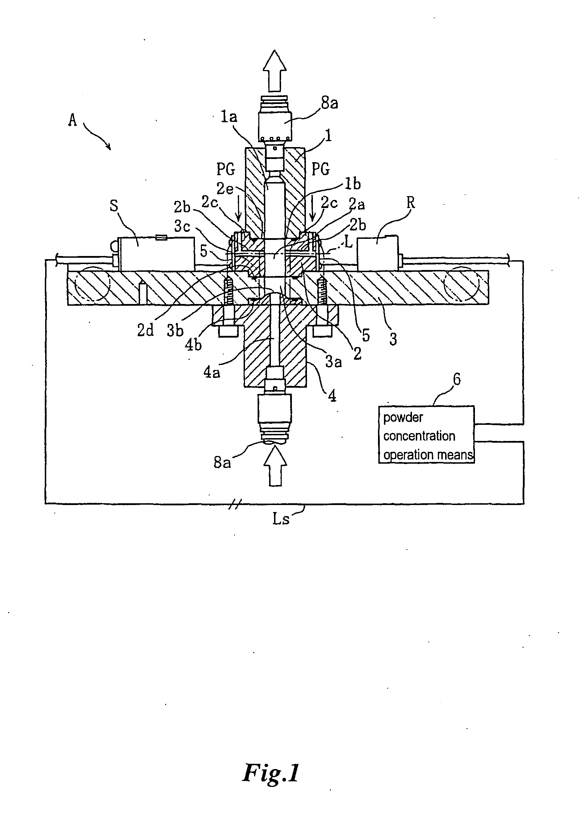

Fig.1 is a vertical sectional view of an essential part showing a basic structure of a powder concentration measuring apparatus according to the present invention.

The powder concentration measuring apparatus A has a material discharge block 1 formed with a material discharge path 1a therein, a measuring block 2 formed with a material measuring path 2a, explained later, and a purge gas introduction path 2b therein. Further, the apparatus A has a base 3 on which a light projector S for radiating a light beam and a light receiver device R for detecting electric signals converted from the radiated light beam so as to be faced each other. Further, the apparatus A has a material introduction block 4 formed with a material introduction path 4a which is connected with a material transport pipe 8 for transporting the powder material. In the figure, the powder material to be measured its concentration is charged in the material introduction path 4a under the material introduction block 4, entered in the material measuring path 2a of the measuring block 2 positioned above via the communication path 3a of the base 3 and measured its concentration. The reference numeral 8a indicates a connection part for connecting the material transport pipe 8.

Explaining the structure of the powder concentration measuring apparatus A in more detail, a recess 3b like a bowl having the bottom at the upper part is formed at the bottom center of the base 3 and an upward projection 4b formed at the material introduction block 4 side is engaged into the recess 3b, thereby being completely engaged without having any deviance.

The measuring block 2 is aligned such that a projection 2d formed under the measuring block 2 is engaged with the recess 3c formed on the upper center of the base 3, and a projection 1b formed on the lower surface of the material discharge block is designed to be engaged to a recess 2e formed corresponding to the upper surface of the measuring block 2.

The powder concentration measuring apparatus A may be constructed such that the base 3 and the material discharge block 4 are connected to grounded so as to eliminate the static electricity (not shown).

A pair of purge gas introduction paths 2b, 2b are provided in the measuring block 2 so as to be faced each other across the material measuring path 2a extending up and down. The openings of the gas introduction path 2b, 2b communicating with outside are comprised of a pair of transparent windows 5, 5 which are sealed with a highly transparent hard material, such as a hard vinyl chloride resin.

The pair of transparent windows 5, 5 and the purge gas introduction paths 2b, 2b are positioned so as to be aligned in such a manner that the other transparent window 5 is seen through one transparent window 5 via the material measuring path 2a. The light projector S is provided at one transparent window 5 and the light receiver R is provided at the other transparent window 5 in such a manner that they face each other and have the same light axis L. How to align the light axis L is not specified here, however, for example the light axis L may be accurately agreed by providing a sensor guide groove to the base 3 for aligning the light axis of the light projector S and that of the light receiver R.

A pair of purge gas introduction ports 2c, 2c are provided at both ends of the upper surface of the measuring block 2 corresponding to the above mentioned pair of purge gas introduction paths 2b, 2b for introducing the purge gas PG (a compressed gas) supplied from outside. The purge gas introduction ports 2c, 2c are communicated to the purge gas introduction paths 2b, 2b, respectively.

As for the material introduction path 4a formed in the material introduction block 4, a communication path 3a formed in the base 3 provided on the block 4, the material measuring path 2a formed in the measuring block 2 on the base 3, the material introduction path 1a formed in the material discharge block 1 provided on the block 2, the internal diameter of the path formed in the block 1 is larger than that of the material introduction path 4a formed in the material introduction block 4 (preferably twice) . Therefore, the powder material charged in the material measuring path 2a of the measuring block 2 from the material transport pipe 8 is dispersed and the concentration of the material is measured.

When the earthing is installed as mentioned above, the powder material which is apt to cause electrostatic attachment may not cause the electrostatic attachment, thereby enabling accurate measurement.

The kinds of the purge gas supplied from the outside and the gas used for pneumatic transportation of powder material are not specified, however, for example atmosphere and nitrogen may be used.

The light projector S and the light receiver R are provided on the base 3 so as to come close to each one of the pair of transparent windows 5, 5 of the measuring block 2 and are connected to a powder concentration operation means 6 through signal line Ls, respectively.

The powder concentration operation means 6 calculates the powder concentration based on the light amount of the light beam which has been radiated from the light projector S driven by a light beam driving means (not shown) and has been received in the light receiver R via the material measuring path 2a. The light amount received in the light receiver R while the powder is introduced in the material measuring path and the light amount (initial light amount) received in the light receiver R when the powder is not introduced therein are compared in the powder concentration operation means 6, and a predetermined operation is executed based on the resulted light attenuation to calculate the powder concentration.

If a standard table which has been prepared in advance corresponding to the particle diameter of the powder to be measured and the kinds of powder is provided, the powder concentration operation means 6 selects a standard table depending on the kinds and particle diameter of the powder to be measured, compares the calculated data with the standard table and executes correction operation, thereby obtaining the powder concentration at high speed. However, the present invention is not limited to that. The powder concentration operated and measured by the powder concentration operation means 6 is output as a numerical data on a display (not shown).

According to thus constructed powder concentration measuring apparatus A of the present invention, the powder material transport pipe 8 is connected with the material introduction block 4 while being supplied with a purge gas from a pair of purge gas introduction ports 2c, 2c, the powder material being pneumatically transported is charged, and the light beam is passed through the material measuring path 2a from the light projector S provided near the transparent window 5 of the measuring block 2. Then, the light receiver R receives the light beam radiated from the light projector S of which the light strength is attenuated by the powder in the material measuring path and the powder concentration operation means 6 calculates and outputs the powder concentration depending on the attenuation rate of the received light beam, thereby measuring the powder concentration passing in the material measuring path on real time.

According to such a powder concentration measuring apparatus A, when the powder concentration is measured as mentioned above, a purge gas is introduced via a pair of purge gas introduction ports 2c, 2c before introducing a powder material in the material introduction block 4. The introduced purge gas enters into the material measuring path 2a of the measuring block 2 through the purge gas introduction paths 2b, 2b and is simultaneously blown inside of the transparent windows 5, 5, thereafter flows together with the transport gas of the powder and further enters into the material discharge path 1a to be supplied outside.

Accordingly, when the purge gas is introduced through the purge gas introduction ports 2c, 2c, it is functioned as a clean gas for removing dust attached on a hard material with a high transmittancy provided inside of the transparent windows 5, 5, in addition, the purge gas prevents the powder transported in the material measuring path 2a from entering into the purge gas introduction paths 2b, 2b because of the air flow directing inside of the material measuring path 2a, so that the powder does not attach inside of the transparent windows 5, 5.

The light beam radiated from the projector S enters in the material measuring path 2a through the transparent window 5, passes through the powder scattering like fog therein, and goes outside through the other transparent window 5 to be received in the receiver R. Therefore, accurate measurement is possible depending on the concentration of powder passing through the material measuring path 2a like fog.

Further according to the powder concentration measuring apparatus A in the figure, the purge gas is fed in the material measuring path 2a through the purge gas introduction paths 2a, 2a which are not related with the light projector S and the light receiver R, and through the purge gas introduction ports 2c, 2c which are orthogonal to the transparent windows 5, 5. The supplied purge gas does not run into the light projector S and the light receiver R, so that it does not adversely affect on them.

Still further according to the powder concentration measuring apparatus A, the purge gas introduced through the purge gas introduction ports 2c, 2c enters in the material measuring path 2a via the purge gas introduction paths 2b, 2b and flows together with the transport gas having transported the powder, so that the decreasing of the transport pressure can be controlled by controlling the supply amount of purge gas in such a case that the material transport pipe becomes long and the transport pressure is reduced.

Moreover, the purge gas flows together with the transport gas having transported the powder, thereby improving the dispersion ability of the transported powder and further improving the measuring accuracy.

When the powder concentration measuring apparatus A is constructed as shown in the figure such that plural blocks are combined, each block is easily disassembled, thereby facilitating cleaning of the material measuring path.

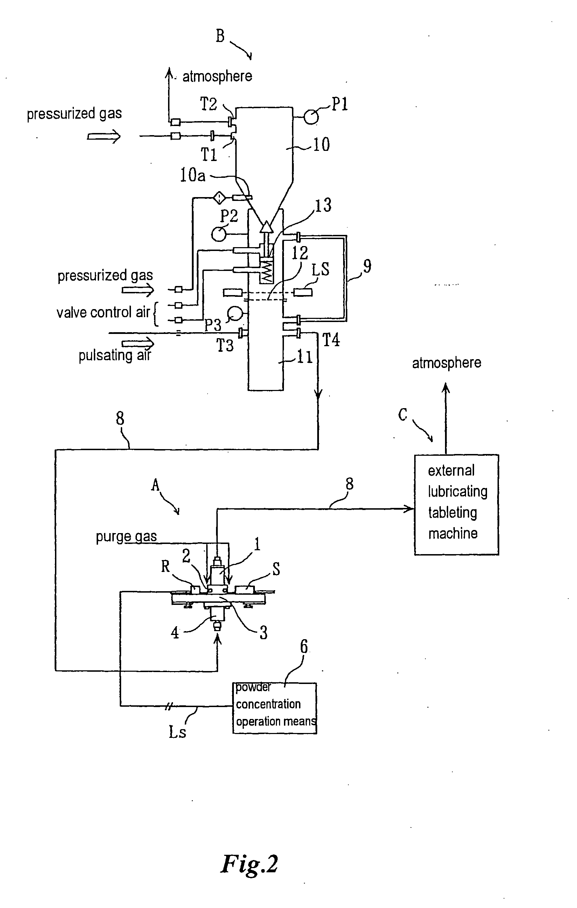

Fig.2 shows an automatic powder spray amount control system using the powder concentration measuring apparatus of the present invention.

The figure shows an application system in which a lubricant is supplied from a powder spray means B to an externally lubricating type tableting machine C. The reference numeral A shows the powder concentration measuring apparatus mentioned above, B indicates a powder spray means for spraying a lubricant powder as a powder, C shows an externally lubricating type tableting machine.

The powder spray means B has a dispersion chamber 11 with a material supply valve 13 which is driven to be opened and closed by being supplied with a compressed air under a material storage chamber 10 like a hopper for storing a lubricant powder as a powder. The dispersion chamber 11 is airtightly constructed and is separated up and down by an elastic vibrating membrane 12.

The elastic vibrating membrane 12 is formed with an elastic material like a silicon rubber and has a small slit like aperture 12a at the center or at plural parts through which the powder usually does not drop. When a fixed amount of powder P is stored on the membrane 12a and is vibrated by a pulsating vibration air introduced in the dispersion chamber 11, the powder P is dropped in the dispersion chamber 11 of which the amount depends on the frequency of the air, thereby spraying and supplying the powder P through a powder discharge outlet T4.

The material storage chamber 10 is formed like a hopper with a narrow end, has a gas supply port T1 connected with a pressurized gas source, a gas exhaust port T2 communicating with atmosphere via a control valve (not shown), and a pressure sensor P1 at its upper part and has a pressurized gas injection nozzle 10a connected to a pressurized gas source at its bottom part.

The gas supply port T1 and the gas exhaust port T2 are provided for controlling the gas pressure supplied in the hopper and the pressurized gas injection nozzle 10a injects a pressurized gas to form a turbulence in the hopper, thereby destroying a solidified powder in the hopper.

The dispersion chamber 11 is an airtight tubular body having a pulsating vibration air introduction port T3 connected to a pulsating vibration air supply source (not shown) and having a powder discharge port T4 connected to the material introduction block 4 of the powder concentration measuring apparatus A as mentioned above through the material transport pipe 8. Pressure sensors P2, P3 are provided for each upper and lower part of the chamber 11 divided by the elastic vibrating membrane 12 and a permeable type level sensor LS is provided for detecting the powder stored on the above-mentioned elastic vibrating membrane 12 in the upper part. The upper part and the lower part of the chamber 11 are communicated each other via a bypass pipe 9 to make both internal pressures equal.

According to the powder spray means B mentioned above, the stored amount of powder on the elastic vibrating membrane 12 is detected by the level sensor Ls. When the stored amount becomes lower than a predetermined level, the material supply valve 13 goes down to drop and supply a fixed amount of powder from the material storage chamber 10. When the material supply valve 13 is opened, the internal pressures of the material storage chamber 10 and the dispersion chamber 11 are detected by the pressure sensors P1, P2 which are provided at the upper part thereof, respectively and the internal pressure in the material storage chamber 10 and that in the dispersion chamber 11 are controlled to be equal.

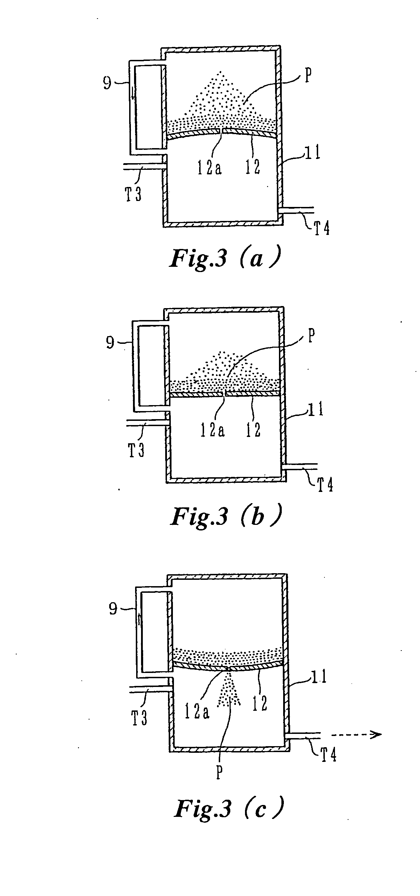

Fig.3a - Fig.3c show the spraying principle of such a powder spray means B.

A fixed amount of powder P is stored on the top surface of the elastic vibrating membrane 12 in the dispersion chamber 11, and the membrane 12 is vibrated up and down by the pulsating vibration air which has been supplied in the dispersion chamber 11.

Observing the change of the elastic membrane 12 in detail, it has been found that the powder P stored on the top surface of the membrane 12 bounds upwardly when the membrane 12 is deformed in an upward direction while receiving the pressure of the pulsating vibration air (see Fig.3a), the membrane 12 returns to a neutral position (see Fig.3b), then the membrane 12 is deformed in a downward direction (see Fig.3c).

The slit like aperture 12a formed on the elastic vibrating membrane 12 is opened like a letter "V" in which its upper part becomes wide to store the powder P therein when the elastic vibrating membrane 12 is deformed. At its neutral position, the slit like aperture 12a catches the powder P therein. When the elastic vibrating membrane 12 is deformed downwardly, the slit like aperture 12a is opened like a reverse "V" to drop the caught powder P in the dispersion chamber 11.

According to such a powder spray means B, when the number and shape of the slit like aperture 12a formed on the elastic vibrating membrane 12 are specified and the powder amount stored on the membrane 12 is further preset by the level sensor LS, the spray amount of elastic vibrating membrane 12 is defined depending on the frequency of the pulsating vibration air.

A control means (not shown) compares the concentration of the powder discharged by the powder spray means B and a control target value and controls the flow amount and frequency of compressed air or pulsating vibration air generated by means of a compressed air, the amount of powder stored in the material storage chamber, or at least one of them in order to diminish the compared difference, thereby accurately controlling the spray amount.

When the powder P is dropped down in the dispersion chamber 11, it is discharged in the material transport pipe 8 through the discharge port T4 together with a pulsating vibration air flow. The discharged powder goes in the powder concentration measuring apparatus B through the material transport pipe 8 and the concentration thereof is measured as mentioned above.

The powder of which concentration has been measured is feed to an externally lubricating type tableting machine C through the transport pipe 8, is applied on the material contacting surfaces of upper and lower punches and the internal surface of a lower die to be compressed into a tablet. Thus produced tablet does not include a lubricant therein, so that it can be used as a tablet with high disintegrability and high absorbaility.

The powder spray means B is not limited to the one in the figure in which the elastic vibrating membrane is provided in the dispersion chamber to be forcibly vibrated by a pulsating vibration air. Alternately, a compressed air may be introduced in the dispersion chamber and is discharged from the powder discharge port.

According to the automatic powder spray amount control system as set forth in Fig.2, the application concentration of the lubricant sprayed from the powder spray means B of the externally lubricating type tableting machine C is measured by the powder concentration measuring apparatus A, and thereafter the measured value is compared with a target concentration prepared in advance. When the measured value is lower than the target value, more than one control factor among the flow amount and frequency of the pulsating vibration air and the amount of lubricant stored on the vibrating membrane are feedback controlled into an increasing direction. On the other hand, the measured value is higher than the target value, more than one of them are feedback controlled into a reducing direction, thereby achieving an automatic control.

### Industrial Applicability

As mentioned above, according to the powder concentration measuring apparatus described in claims 1 and 2, a material measuring path does not have a curved portion and a light projecting device and a light receiving device are provided out of the material measuring path, thereby having a simple structure, being easily set, and reducing a required space for settlement.

When a light beam is radiated from a light projector and is received in a light receiver, it is operated and measured by a powder concentration operation means, so that a real time measuring can be executed. Specifically, if the internal diameter of the material measuring path is larger than that of a material transport pipe claimed in claim 2, the powder which has been transported in the material transport pipe together with a transport gas is diffused in the material measuring path, thereby being transported into an objective place while being dispersed and being measured accurately under such a condition.

Further, after a purge gas introduced from a pair of purge gas introduction paths being provided so as to cross the material measuring path is blown to a pair of transparent windows, it is introduced into the material measuring path. Therefore, the powder passing through the material measuring path does not flow backward into the transparent windows, so that the transparent windows can be kept clean without being attached with powder, dust and grime, thereby enabling a highly accurate measurement.

The purge gas flows together with a transport gas which has transported the powder to improve a powder dispersion ability, so that the measurement accuracy is improved.

If the powder concentration measuring apparatus is constructed as a combination of plural blocks mentioned in the above embodiment, cleaning is facilitated because the blocks are easily disassembled.

According to the automatic powder spray amount control system described in claim 3, the powder sprayed by the powder spray means which can control the discharge amount of powder by introducing a compressed air or a pulsating vibration air generated by means of a compressed air is measured by the powder concentration measuring apparatus, the measured value is compared with a control target value, and the control factor is controlled so as to compensate the difference, thereby providing an automatic spray system with high accuracy.

Further according to the automatic powder spray amount control system described in claim 4, the adjusting amount of powder to be sprayed is accurately controlled when a tablet is produced with an externally lubricating type tableting machine, so that an externally lubricated tablet with high accuracy can be produced.

## Claims

1. A powder concentration measuring apparatus comprising:
a pair of purge gas introducing paths, said pair of purge gas introducing paths being provided across a material measuring path which introduces a powder material pneumatically transported,
a pair of transparent windows, each of said transparent windows being provided so that said material measuring path is viewable through said pair of purge gas introducing paths,
a light projecting device and a light receiving device, said light projecting device being provided at the one of said transparent windows, and said light receiving device being provided at the other of said transparent windows, and
a powder concentration operation and control means, said operation and control means calculating a powder concentration depending on the light amount received by said light receiving device when a light beam is projected from said light projecting device and radiated into said material measuring path.

2. The powder concentration measuring apparatus as set forth in claim 1, wherein said material measuring path is connected to a material transport pipe in which a powder material is pneumatically transported and has the same or a larger internal diameter than that of said material transport pipe.

3. An automatic powder spray amount control system comprising:
a powder spray means comprising a material storing chamber for storing a powder material therein and a dispersing chamber equipped with an air introduction port and a powder discharge port, said air introduction port introducing a compressed air or a pulsating vibration air generated by using a compressed air,
a powder concentration measuring apparatus as set forth in claim 1 or 2, connected to said material discharge port via a material transport pipe, and
a control means for controlling at least one of control factors, which are the flow amount and frequency of the compressed air or the pulsating vibration air generated by using a compressed air supplied to said dispersion chamber of said powder spray means, and the amount of powder materials stored in said material storing chamber, by comparing the powder concentration measured by said powder concentration measuring apparatus with a control target concentration prepared in advance.

4. The automatic powder spray amount control system as set forth in claim 3, wherein said powder spray means constitutes a lubricant spray means of an externally lubricating tableting machine.
